# EUROPEAN PATENT APPLICATION

(11) **EP 4 440 209 A1**
(43) Date of publication of application: **02.10.2024**
(21) Application number: 21965147.8
(22) Date of filing: 25.11.2021
(51) Int. Cl.: H04W 56/00

(54) **METHOD AND APPARATUS FOR SYNCHRONIZING TERMINAL AND NETWORK, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2021/133263
(87) International publication number: WO 2023/092412

(57) **Abstract**

Provided in the embodiments of the present disclosure is a method for synchronizing a terminal and a network. The method is executed by a terminal and comprises: determining an availability state of a synchronization reference signal on the basis of a result indicating whether availability indication information is received, wherein the availability indication information at least indicates that the state of the synchronization reference signal is an available state or an unavailable state, and the synchronization reference signal is used for synchronization between a terminal in a radio resource control (RRC) non-connected state, and a network.

## Description

### TECHNICAL FIELD

The present disclosure relates to the field of wireless communication technologies, but is not limited to the field of wireless communication technologies, and in particular relates to a method and an apparatus for synchronizing a terminal and a network, a communication device and a storage medium.

### BACKGROUND

In communication network technologies, in order to realize reliable communication between a terminal and a network, it is necessary to perform synchronization between the terminal and the network. On the terminal side, the terminal needs to determine how to perform synchronization between the terminal and the network according to reference information. In an application scenario, the synchronization between the terminal and the network may be implemented by using a synchronization signal and physical broadcast channel block (SSB) for synchronization.

However, in the related art, since in a time domain, a position of the SSB is far from a position of a paging occasion (PO), the terminal needs to wake up a long time in advance to achieve synchronization with the SSB, which causes a large power consumption of the terminal, therefore, a new synchronization method needs to be introduced.

### SUMMARY

Embodiments of the present disclosure disclose a method and an apparatus for synchronizing a terminal and a network, a communication device, and a storage medium.

According to a first aspect of embodiments of the present disclosure, there is provided a method for synchronizing a terminal and a network. The method is performed by a terminal, and the method includes:
determining an availability state of a synchronization reference signal based on a result of whether receiving availability indication information.

The availability indication information at least indicates a state of the synchronization reference signal is an available state or an unavailable state, and the synchronization reference signal is used for synchronization between the terminal in a radio resource control (RRC) disconnected state and the network.

In an embodiment, determining the availability state of the synchronization reference signal based on the result of whether receiving the availability indication information, includes:
in response to receiving the availability indication information, determining the availability state of the synchronization reference signal according to the availability indication information.

In an embodiment, determining the availability state of the synchronization reference signal according to the availability indication information, includes:
in response to the availability indication information indicating that the availability state of the synchronization reference signal is the available state, determining that the synchronization reference signal is in the available state;
   or,
in response to the availability indication information indicating that the availability state of the synchronization reference signal is the unavailable state, determining that the synchronization reference signal is in the unavailable state.

In one embodiment, the method further includes:
updating the availability state of the synchronization reference signal according to an update period, in which the update period is not less than a paging monitoring period of the terminal.

In one embodiment, the method further includes:
in response to receiving the availability indication information, immediately making an availability state indicated by the availability indication information valid;
   or,
in response to receiving the availability indication information, making an availability state indicated by the availability indication information valid in a next discontinuous reception (DRX) cycle.

In one embodiment, the method further includes:
in a case that a boundary of an update period is reached, making an availability state indicated by the availability indication information valid;
in which the update period is configured to update the availability state of the synchronization reference signal.

In one embodiment, the update period is as same as a change period of a system message.

In an embodiment, determining the availability state of the synchronization reference signal based on the result of whether receiving the availability indication information, includes:
in response to an impossibility of receiving the availability indication information, determining the availability state of the synchronization reference signal in a predetermined manner;
in which the predetermined manner includes:
a first manner, in which the availability state is determined based on a predetermined configuration state;
   and/or,
a second manner, in which the availability state is determined based on a system message.

In one embodiment, the method further includes:
in response to a paging monitoring period of the terminal being greater than an update period, determining the impossibility of receiving the availability indication information;
   or,
in response to wireless communication quality being less than a signal quality threshold, determining the impossibility of receiving the availability indication information.

In one embodiment, the predetermined manner is the first manner, and determining the availability state of the synchronization reference signal in the first manner includes:
determining the state of the synchronization reference signal as the unavailable state according to the predetermined configuration state, in which the predetermined configuration state is the unavailable state.

In an embodiment, the predetermined manner is the second manner, and determining the availability state of the synchronization reference signal in the second manner includes:
determining the availability state of the synchronization reference signal according to a received system message.

In an embodiment, determining the availability state of the synchronization reference signal according to the received system message, includes:
determining a state of the synchronization reference signal according to configuration information of the synchronization reference signal carried in the system message;
   or,
determining a state of the synchronization reference signal according to availability indication information carried in the system message.

In an embodiment, determining the state of the synchronization reference signal according to the configuration information of the synchronization reference signal carried in the system message, includes:
in response to the configuration information indicating that no configuration parameter of the synchronization reference signal is configured, determining the state of the synchronization reference signal as the unavailable state;
   or,
in response to the configuration information indicating that a configuration parameter of the synchronization reference signal is configured, determining the state of the synchronization reference signal according to a predetermined configuration, in which the predetermined configuration indicates that the state of the synchronization reference signal is configured as the available state or the unavailable state.

In an embodiment, determining the state of the synchronization reference signal according to the availability indication information carried in the system message, includes:
in response to a predetermined information field of the system message indicating a first value, determining the state of the synchronization reference signal as the available state;
   or,
in response to a predetermined information field of the system message indicating a second value, determining the state of the synchronization reference signal as the unavailable state;
   or,
in response to the system message not carrying a predetermined information field, determining the state of the synchronization reference signal as the unavailable state;
   or,
in response to the system message carrying a predetermined information field, determining the state of the synchronization reference signal as the available state.

In one embodiment, the method further includes:
in response to determining the availability state of the synchronization reference signal in the predetermined manner, making the availability state valid in a next DRX cycle;
   or,
in response to determining the availability state of the synchronization reference signal in the predetermined manner, immediately making the availability state valid.

In one embodiment, the method further includes:
receiving synchronization instruction information sent by the base station, in which the synchronization instruction information is at least configured to instruct the terminal not to perform synchronization between the terminal and the base station based on an availability state.

In one embodiment, the terminal is a terminal with a paging monitoring period greater than a set threshold.

In one embodiment, receiving the synchronization instruction information sent by the base station includes:
receiving the synchronization instruction information sent by the base station in a broadcast manner;
   or,
receiving the synchronization instruction information sent by the base station in a unicast manner;
   or,
receiving the synchronization instruction information sent by the base station in a predetermined manner determined by a predetermined rule.

In one embodiment, the synchronization reference signal includes at least one of a time-frequency tracking reference signal (TRS) or a channel state information reference signal (CSI-RS).

In one embodiment, the availability indication information includes:
first information, configured to indicate that the state of the synchronization reference signal is switched from the available state to the unavailable state;
   or,
second information, configured to indicate that the state of the synchronization reference signal is switched from the unavailable state to the available state.

According to a second aspect of embodiments of the present disclosure, there is provided a method for indicating a synchronization reference signal. The method is performed by a base station, and the method includes:
sending availability indication information to a terminal in a radio resource control (RRC) disconnected state;
in which the availability indication information at least indicates a state of the synchronization reference signal is an available state or an unavailable state, and the synchronization reference signal is used for synchronization between the terminal and a network.

In one embodiment, the method further includes:
sending synchronization instruction information to the terminal, in which the synchronization instruction information is at least configured to instruct the terminal not to perform synchronization between the terminal and the base station based on an availability state

In one embodiment, the synchronization reference signal includes at least one of a time-frequency tracking reference signal (TRS) or a channel state information reference signal (CSI-RS).

In one embodiment, the availability indication information includes:
first information, configured to indicate that the state of the synchronization reference signal is switched from the available state to the unavailable state;
   or,
second information, configured to indicate that the state of the synchronization reference signal is switched from the unavailable state to the available state.

According to a third aspect of embodiments of the present disclosure, there is provided an apparatus for indicating a synchronization reference signal. The apparatus includes:
a determining module, configured to determine an availability state of a synchronization reference signal based on a result of whether receiving availability indication information;
in which the availability indication information at least indicates a state of the synchronization reference signal is an available state or an unavailable state, and the synchronization reference signal is used for synchronization between the terminal in a radio resource control (RRC) disconnected state and the network.

According to a fourth aspect of embodiments of the present disclosure, there is provided an apparatus for indicating a synchronization reference signal. The apparatus includes:
a sending module, configured to send availability indication information to a terminal in a radio resource control (RRC) disconnected state;
in which the availability indication information at least indicates a state of the synchronization reference signal is an available state or an unavailable state, and the synchronization reference signal is used for synchronization between the terminal and the network.

According to a fifth aspect of embodiments of the present disclosure, there is provided a communication device. The communication device includes:
a processor; and
a memory for storing instructions executable by the processor.

The processor is configured to implement the method of any embodiment of the present disclosure when executing the executable instructions.

According to a sixth aspect of embodiments of the present disclosure, there is provided a computer storage medium. The computer storage medium stores a computer-executable program, and when the executable program is executed by a processor, the method of any embodiment of the present disclosure is implemented.

In the embodiments of the present disclosure, based on the result of whether the availability indication information is received, the availability state of the synchronization reference signal is determined. The availability indication information at least indicates the state of the synchronization reference signal is the available state or the unavailable state, and the synchronization reference signal is used for the synchronization between the terminal in the RRC disconnected state and the network. Here, the above method can be adapted to the reception situations of the availability indication information, since compared with a method that the terminal in the RRC disconnected state determines the availability state of the synchronization reference signal based on a single manner in the cases of receiving and not receiving the availability indication information, the availability state of the synchronization reference signal is determined according to the result of whether the terminal in the RRC disconnected state receives the availability indication information. Therefore, the synchronization between the terminal and the network is more reliable and accurate.

### BRIEF DESCRIPTION OF THE DRAWINGS

Fig. 1 is a schematic structural diagram of a wireless communication system according to an exemplary embodiment.
Fig. 2 is a schematic flowchart of a method for synchronizing a terminal and a network according to an exemplary embodiment.
Fig. 3 is a schematic flowchart of a method for synchronizing a terminal and a network according to an exemplary embodiment.
Fig. 4 is a schematic flowchart of a method for synchronizing a terminal and a network according to an exemplary embodiment.
Fig. 5 is a schematic flowchart of a method for synchronizing a terminal and a network according to an exemplary embodiment.
Fig. 6 is a schematic flowchart of a method for synchronizing a terminal and a network according to an exemplary embodiment.
Fig. 7 is a schematic flowchart of a method for synchronizing a terminal and a network according to an exemplary embodiment.
Fig. 8 is a schematic flowchart of a method for synchronizing a terminal and a network according to an exemplary embodiment.
Fig. 9 is a schematic flowchart of a method for synchronizing a terminal and a network according to an exemplary embodiment.
Fig. 10 is a schematic flowchart of a method for synchronizing a terminal and a network according to an exemplary embodiment.
Fig. 11 is a schematic flowchart of a method for synchronizing a terminal and a network according to an exemplary embodiment.
Fig. 12 is a schematic flowchart of a method for synchronizing a terminal and a network according to an exemplary embodiment.
Fig. 13 is a schematic flowchart of a method for synchronizing a terminal and a network according to an exemplary embodiment.
Fig. 14 is a schematic flowchart of a method for synchronizing a terminal and a network according to an exemplary embodiment.
Fig. 15 is a schematic flowchart of a method for synchronizing a terminal and a network according to an exemplary embodiment.
Fig. 16 is a schematic flowchart of a method for synchronizing a terminal and a network according to an exemplary embodiment.
Fig. 17 is a schematic structural diagram of an apparatus for synchronizing a terminal and a network according to an exemplary embodiment.
Fig. 18 is a schematic structural diagram of an apparatus for synchronizing a terminal and a network according to an exemplary embodiment.
Fig. 19 is a schematic structural diagram of a terminal according to an exemplary embodiment.
Fig. 20 is a block diagram of a base station according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the disclosed embodiments as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only configured to distinguish information of the same type from one another. For example, without departing from the scope of the embodiments of the present disclosure, first information may also be called second information, and similarly, second information may also be called first information. Depending on the context, the words "if' as used herein may be interpreted as "when" or "while" or "in response to determining that".

For the purpose of brevity and ease of understanding, the term "greater than" or "less than" is used herein when characterizing a size relationship. However, those skilled in the art can understand that the term "greater than" also covers the meaning of "greater than or equal to", and "less than" also covers the meaning of "less than or equal to".

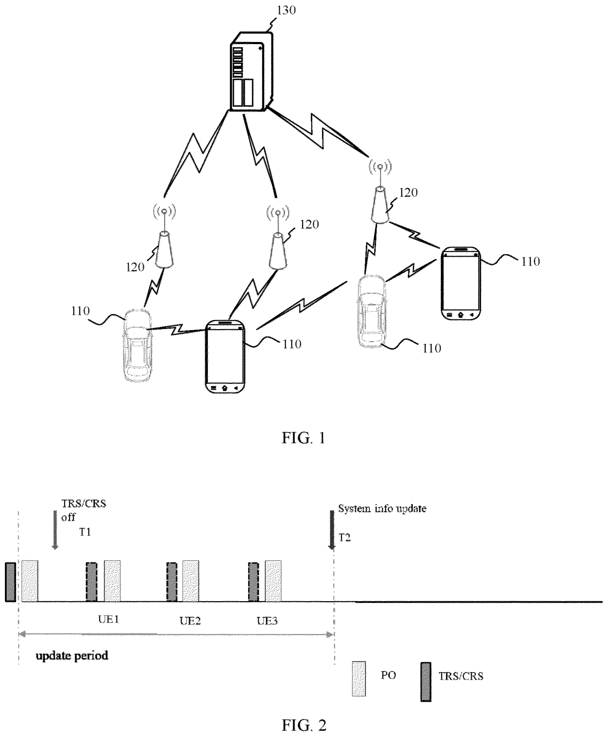

Please refer to FIG. 1, which shows a schematic structural diagram of a wireless communication system provided by an embodiment of the present disclosure. As shown in FIG. 1, the wireless communication system is a communication system based on mobile communication technology, and the wireless communication system may include: several user equipments 110 and several base stations 120.

The user equipment 110 may be a device that provides voice and/or data connectivity to a user. The user equipment 110 may communicate with one or more core networks via a radio access network (RAN). The user equipment 110 may be an Internet of Things user equipment, such as a sensor device, a mobile phone, or a computer having an IoT terminal, such as a fixed, portable, pocket, hand-held, built-in computer or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may also be a device of an unmanned aerial vehicle. Alternatively, the user equipment 110 may also be a vehicle-mounted device, for example, it may be a trip computer with a wireless communication function, or a wireless terminal connected externally to a trip computer. Alternatively, the user equipment 110 may also be a roadside device, for example, it may be a street lamp, a signal lamp, or other roadside devices with a wireless communication function.

The base station 120 may be a network side device in a wireless communication system. The wireless communication system may be a fourth generation mobile communication (4G) system, also known as a long term evolution (LTE) system; or, the wireless communication system may also be a 5G system, also known as new air interface system or 5GNR system. Alternatively, the wireless communication system may also be a next-generation system beyond the 5G system. An access network in the 5G system may be called NG-RAN (new generation-radio access network).

The base station 120 may be an evolved base station (eNB) adopted in a 4G system. Alternatively, the base station 120 may also be a base station (gNB) adopting a centralized distributed architecture in the 5G system. When the base station 120 adopts the centralized distributed architecture, it generally includes a central unit (CU) and at least two distributed units (DUs). The centralized unit is provided with a packet data convergence protocol (PDCP) layer, a radio link control protocol (RLC) layer, a media access control (MAC) layer protocol stack; a physical (PPHY) layer protocol stack is set in the distributed unit. The embodiments of the present disclosure does not limit the specific implementation of the base station 120 .

A wireless connection may be established between the base station 120 and the user equipment 110 through a wireless air interface. In different embodiments, the wireless air interface is a wireless air interface based on the fourth-generation mobile communication network technology (4G) standard; or, the wireless air interface is a wireless air interface based on the fifth-generation mobile communication network technology (5G) standard, for example the wireless air interface is a new air interface; or, the wireless air interface may also be a wireless air interface based on a next-generation mobile communication network technical standard based 5G.

In some embodiments, an E2E (end to end) connection may also be established between the user equipments 110, for example, V2V (vehicle to vehicle) communication, V2I (vehicle to infrastructure) communication, V2P (vehicle to pedestrian) communication, and other scenes in vehicle to everything (V2X) communication.

Here, the above user equipment may be regarded as a terminal equipment in the following embodiments.

In some embodiments, the foregoing wireless communication system may further include a network management device 130.

Several base stations 120 are connected to the network management device 130 respectively. The network management device 130 may be a core network device in the wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS), etc. The implementation of the network management device 130 is not limited in the embodiments of the present disclosure.

In order to facilitate the understanding of those skilled in the art, the embodiments of the present disclosure list a plurality of implementations to clearly illustrate technical solutions of the embodiments of the present disclosure. Of course, those skilled in the art can understand that the multiple embodiments provided by the embodiments of the present disclosure can be executed independently, or combined with the methods of other embodiments in the embodiments of the present disclosure, and can also be executed together with some methods in other related art after taking alone or in combination; which is not limited in the embodiments of the present disclosure.

In order to better understand the technical solution described in any embodiment of the present disclosure, first, a scenario of synchronization between a terminal and a network in the related art is described.

In one embodiment, in a case that radio resource control (RRC) is in an idle state, an additional time-frequency tracking reference signal (TRS) or cell reference signal (CRS) may be used to assist the terminal to perform time-frequency domain synchronization between the terminal and the network. Compared with the SSB synchronization, the configuration of TRS or CRS can be configured closer to the PO time, while the original SSB is farther away from the PO time. Therefore, the terminal needs to wake up a long time in advance to synchronize with the SSB. After using the additional TRS or CRS, the terminal can wake up later, so as to save more power.

In an embodiment, configuration information of the additional TRS or CRS and availability state information of whether broadcasting the TRS or CRS may be broadcast in a system message. The configuration information of the TRS/CRS may be considered as being indicated separately from the available state information. That is, the network may configure the TRS/CRS, but not perform real transmission. That is to say, it is not used by the terminal in the RRC idle state.

In one embodiment, the state information of whether broadcasting the TRS or CRS needs to be notified to the terminal in the RRC disconnected state, because the terminal needs to determine how to synchronize with the network according to valid TRS or CRS information. If the two are inconsistent, it will cause serious problems. For example, when the network is sending the valid TRS or CRS information, if the terminal determines that there is no such information, the terminal will use the original SSB synchronization method for synchronization, which will cause a large power consumption; on the contrary, if the network stops sending the valid TRS or CRS information, while the terminal still performs synchronization in the original manner, the synchronization accuracy will decrease.

In an embodiment, the user may be notified by way of system message update or by way of paging downlink control information (DCI) or paging early indication (PEI). Regardless of the way, because paging DCI needs to be sent, and POs of different users are calculated based on modulo operation for UE IDs. Therefore, it is impossible for all terminals to receive indications from the base station at the same time.

In one embodiment, please refer to FIG. 2, if a cycle of an availability change of the TRS or CSI-RS is multiplexed with a cycle of system message change, there will be the following problem: the network needs to change the availability at a specific time boundary. Assuming that the specific time boundary is a system message modification boundary (T2). If a user in a connected state suddenly switch away before the system message modification boundary (T1), there will be no TRS or CRS resources from the time Tl, while the configuration of the terminal needs to be updated at time T2, but the PO position of the terminal after T1 is still using the original TRS or CSI-RS for synchronization to obtain the paging DCI (an example in the figure is 3 users at different PO positions), the paging DCI cannot be monitored, and thus the wrong TRS or CSI-RS is used for synchronization afterwards, but in fact the network has turned off the TRS or CSI-RS.

In an embodiment, assuming that there are a discontinuous reception (DRX) cycle user and an extended discontinuous reception (eDRX) cycle user in the network at the same time. For the DRX user, its DRX cycle is shorter than the cycle of system message change, so it will definitely receive a paging message within the cycle of system message change. However, for the eDRX user, a system message update boundary is 256SFN, that is, every 2.56s. At this time, if the network updates an availability of TRS/CRS resources according to the eDRX update boundary, it means that the network needs to keep sending the TRS/CRS resources until the eDRX user is notified, that is, an allowed update boundary point is 2.56s. In one embodiment, two sets of TRS or CRS resources are used, one for the DRX user and one for the eDRX user, and the latter needs to be updated at the eDRX update boundary. In this case, the transmission of two sets of TRS/CRS will cause a waste of resources.

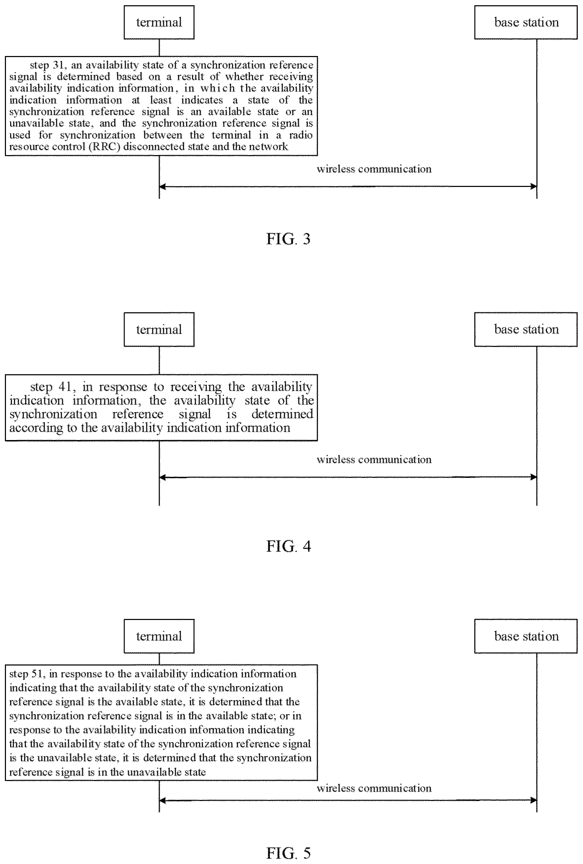

As shown in FIG. 3, a method for synchronizing a terminal and a network is provided in an embodiment. The method is performed by the terminal, and the method includes:
step 31, an availability state of a synchronization reference signal is determined based on a result of whether receiving availability indication information.

The availability indication information at least indicates a state of the synchronization reference signal is an available state or an unavailable state, and the synchronization reference signal is used for synchronization between the terminal in a radio resource control (RRC) disconnected state and the network.

Here, the terminal involved in the present disclosure may be, but not limited to, a mobile phone, a wearable device, a vehicle-mounted terminal, a road side unit (RSU), a smart home terminal, an industrial sensing device, and/or a medical device. Here, the terminal in the RRC disconnected state may be the terminal in an RRC idle state or the terminal in an RRC inactive state. Here, the terminal may be a terminal with a paging monitoring period greater than a set threshold.

The base station involved in the present disclosure may be an access device for the terminal to access a network. Here, the base station may be various types of base stations, for example, a base station of a third-generation mobile communication (3G) network, a base station of a fourth-generation mobile communication (4G) network, a base station of a fifth-generation mobile communication (5G) network, or other Evolved base station.

In one embodiment, the synchronization reference signal includes at least one of a time-frequency tracking reference signal (TRS) and a channel state information reference signal (CSI-RS). It should be noted that, the synchronization reference signal may also be other reference signals that can be used for synchronization between the terminal and the network, which is not limited here.

In one embodiment, the availability indication information may be information configured to indicate that the state of the synchronization reference signal is switched from the available state to the unavailable state; or, the availability indication information may also be information configured to indicate that the state of the synchronization reference signal is switched from the unavailable state to the available state.

Exemplarily, the availability state may be indicated in an explicit manner. For example, if a predetermined information field of the availability indication information indicates a first value, the state of the synchronization reference signal is the available state; or, if the predetermined information field of the availability indication information indicates a second value, the state of the synchronization reference signal is the unavailable state.

Exemplarily, the availability state may also be indicated in an implicit manner. For example, if the message carries a predetermined information field of the availability indication information, the state of the synchronization reference signal is the available state; or, if the message does not carry the predetermined information field of the availability indication information, the state of the synchronization reference signal is the unavailable state.

In an embodiment, the base station may configure configuration information of the synchronization reference signal. Here, the configuration information at least indicates time domain and/or frequency domain information for transmitting the synchronization reference signal. The base station may determine the availability indication information according to a determined result of whether broadcasting the synchronization reference signal. Exemplarily, if the base station is broadcasting the synchronization reference signal, the availability indication information indicates that the state of the synchronization reference signal is the available state, or, if the base station is not broadcasting the synchronization reference signal, the availability indication information indicates that the state of the synchronization reference signal is the unavailable state. It should be noted that whether broadcasting the synchronization reference signal may be determined by the base station.

In one embodiment, the base station sends the availability indication information to the terminal; in response to the terminal receiving the availability indication information, the terminal determines the availability state of the synchronization reference signal according to the availability indication information, or, in response to the terminal not receiving the availability indication information, the terminal determines the availability state of the synchronization reference signal in a predetermined manner. Here, the predetermined manner may be different from the manner of determining the availability state of the synchronization reference signal according to the availability indication information. For example, it may be a manner of determining the availability state of the synchronization reference signal according to information carried in a system message, which is not limited here.

In one embodiment, in response to the terminal receiving the availability indication information and the availability indication information indicating that the availability state of the synchronization reference signal is the available state, the terminal determines that the synchronization reference signal is in the available state; or, in response to the terminal receiving the availability indication information and the availability indication information indicating that the availability state of the synchronization reference signal is the unavailable state, the terminal determines that the synchronization reference signal is in the unavailable state. Here, when the synchronization reference signal is in the available state, the terminal may perform synchronization between the terminal and the network based on the synchronization reference signal. It should be noted that, when the synchronization reference signal is in the unavailable state, the terminal cannot perform synchronization between the terminal and the network based on the synchronization reference signal.

In one embodiment, when the terminal does not receive the availability indication information, the terminal may perform synchronization between the network and the terminal according to an SSB-based synchronization manner. Alternatively, when the terminal receives the availability indication information and the availability indication information indicates that the synchronization reference signal is in the unavailable state, the terminal may perform synchronization between the network and the terminal according to the SSB-based synchronization manner. In this way, it can be adapted to different network scenarios.

In one embodiment, when the terminal does not receive the availability indication information, the terminal may perform synchronization between the network and the terminal according to the state of the synchronization reference signal determined in a first manner. The first manner is to determine the availability based on a predetermined configuration state. Here, the predetermined configuration state may be preconfigured as the available state or the unavailable state. It should be noted that, before performing synchronization between the network and the terminal according to the first manner, the terminal needs to receive the configuration information of the synchronization reference signal.

In one embodiment, when the terminal does not receive the availability indication information, the terminal may perform synchronization between the network and the terminal according to the state of the synchronization reference signal determined in a second manner. The second manner is to determine the availability state based on a system message. Here, the system message may carry indication information of the availability state, and the indication information may indicate that the synchronization reference signal is in the available state or the unavailable state. Here, as mentioned above, the system message may indicate the indication information of the availability state in an explicit or implicit manner, which is not limited here. In an embodiment, the system message may also carry the configuration information of the synchronization reference signal.

In one embodiment, in response to receiving the availability indication information, the availability state of the synchronization reference signal is determined according to the availability indication information. After the terminal determines the availability state of the synchronization reference signal based on the received availability indication information, it may update the availability state of the synchronization reference signal at a predetermined time point determined according to the update period. As an embodiment, the update period is a default DRX paging cycle of the cell. In one embodiment, updating the availability state of the synchronization reference signal at the predetermined time point may be updating the availability state of the synchronization reference signal at the beginning of an update period in which the availability indication information is received.

In one embodiment, in response to receiving the availability indication information, the availability state of the synchronization reference signal is determined according to the availability indication information. After the availability state of the synchronization reference signal is determined, the availability state indicated by the availability indication information is made valid immediately. Alternatively, in response to receiving the availability indication information, the availability state of the synchronization reference signal is determined according to the availability indication information. After the availability state of the synchronization reference signal is determined, the availability state indicated by the availability indication information is made valid in a next DRX cycle.

In one embodiment, in response to receiving the availability indication information, the availability state of the synchronization reference signal is determined according to the availability indication information. When a boundary of an update period is reached, the availability state indicated by the availability indication information is made valid. The update period is configured to update the availability state of the synchronization reference signal. Here, the update period may be as same as a change period of a system message.

It should be noted that the update of the availability state may be a process different from a process of making the availability state valid. Updating the availability state does not mean that the availability state has been made valid. The synchronization between the terminal and the network based on the synchronization reference signal can be performed only after the availability state has been made valid.

In one embodiment, if the paging monitoring period of the terminal is greater than the update period, the impossibility of receiving the availability indication information is determined, and at this time, the terminal determines the availability state of the synchronization reference signal in the predetermined manner. Alternatively, if wireless communication quality is less than a signal quality threshold, the impossibility of receiving the availability indication information is determined, and at this time, the terminal determines the availability state of the synchronization reference signal in the predetermined manner. Here, the predetermined manner may include: a first manner, in which the availability state is determined based on the predetermined configuration state; and/or, a second manner, in which the availability state is determined based on the system message.

In one embodiment, the impossibility of the terminal to receive the availability indication information may be: trying to decode, but the decoding fails due to signal quality.

In one embodiment, the impossibility of the terminal to receive the availability indication information may be: from out of coverage to return to coverage. It should be noted that, in the present disclosure, the reason for the impossibility of the terminal to receive the availability indication information is not specifically limited, and includes various situations that cause the impossibility of receiving the availability indication information.

In one embodiment, if the paging monitoring period of the terminal is shorter than the update period, a possibility of receiving the availability indication information is determined, and at this time, the availability state of the synchronization reference signal may be determined according to the availability indication information.

In an embodiment, the update period is a default DRX paging cycle of the cell.

It should be noted that the term "greater than" in the present disclosure also covers the meaning of "greater than or equal to", and "less than" also covers the meaning of "less than or equal to".

In the embodiments of the present disclosure, based on the result of whether the availability indication information is received, the availability state of the synchronization reference signal is determined. The availability indication information at least indicates the state of the synchronization reference signal is the available state or the unavailable state, and the synchronization reference signal is used for the synchronization between the terminal in the RRC disconnected state and the network. Here, the above method can be adapted to the reception situations of the availability indication information, since compared with a method that the terminal in the RRC disconnected state determines the availability state of the synchronization reference signal based on a single manner in the cases of receiving and not receiving the availability indication information, the availability state of the synchronization reference signal is determined according to the result of whether the terminal in the RRC disconnected state receives the availability indication information. Therefore, the synchronization between the terminal and the network is more reliable and accurate.

It should be noted that those skilled in the art can understand that the methods provided in the embodiments of the present disclosure may be executed independently, or together with some methods in the embodiments of the present disclosure or some methods in related art.

As shown in FIG. 4, a method for synchronizing a terminal and a network is provided in an embodiment. The method is performed by a terminal, and the method includes:
step 41, in response to receiving the availability indication information, the availability state of the synchronization reference signal is determined according to the availability indication information.

In one embodiment, if a paging monitoring period of the terminal is shorter than an update period, a possibility of receiving the availability indication information is determined, and at this time, the availability state of the synchronization reference signal may be determined according to the availability indication information.

In one embodiment, in response to receiving the availability indication information and the availability indication information indicating that the availability state of the synchronization reference signal is the available state, it is determined that the synchronization reference signal is in the available state; or, in response to receiving the availability indication information and the available indication information indicating that the availability state of the synchronization reference signal is the unavailable state, it is determined that the synchronization reference signal is in the unavailable state.

In one embodiment, in response to receiving the availability indication information, the availability state of the synchronization reference signal is determined according to the availability indication information. After the availability state of the synchronization reference signal is determined, the availability state indicated by the availability indication information may be made valid immediately; or, after the availability state of the synchronization reference signal is determined, the availability state indicated by the availability indication information may be made valid in a next DRX cycle.

Here, after the availability state is made valid, synchronization between the terminal and the network may be performed based on the valid availability state. In an embodiment, when the terminal receives the availability indication information and the availability indication information indicates that the synchronization reference signal is in the unavailable state, the terminal may perform synchronization between the network and the terminal according to the SSB-based synchronization manner.

It should be noted that those skilled in the art can understand that the methods provided in the embodiments of the present disclosure may be executed independently, or together with some methods in the embodiments of the present disclosure or some methods in related art.

As shown in FIG. 5, a method for synchronizing a terminal and a network is provided in an embodiment. The method is performed by the terminal, and the method includes:
step 51, in response to the availability indication information indicating that the availability state of the synchronization reference signal is the available state, it is determined that the synchronization reference signal is in the available state;
   or,
in response to the availability indication information indicating that the availability state of the synchronization reference signal is the unavailable state, it is determined that the synchronization reference signal is in the unavailable state.

In one embodiment, in response to the availability indication information indicating that the availability state of the synchronization reference signal is the available state, it is determined that the synchronization reference signal is in the available state and the availability state is made valid immediately. As such, synchronization between the terminal and the network can be immediately performed based on the synchronization reference signal.

In one embodiment, in response to the availability indication information indicating that the availability state of the synchronization reference signal is the available state, it is determined that the synchronization reference signal is in the available state and the availability state is made valid in a next DRX cycle. In this way, synchronization between the terminal and the network can be performed based on the synchronization reference signal in the next DRX cycle.

In one embodiment, in response to the availability indication information indicating that the availability state of the synchronization reference signal is the unavailable state, it is determined that the synchronization reference signal is in the unavailable state. At this time, synchronization between the terminal and the network may be performed in an SSB-based synchronization manner.

It should be noted that those skilled in the art can understand that the methods provided in the embodiments of the present disclosure may be executed independently, or together with some methods in the embodiments of the present disclosure or some methods in related art.

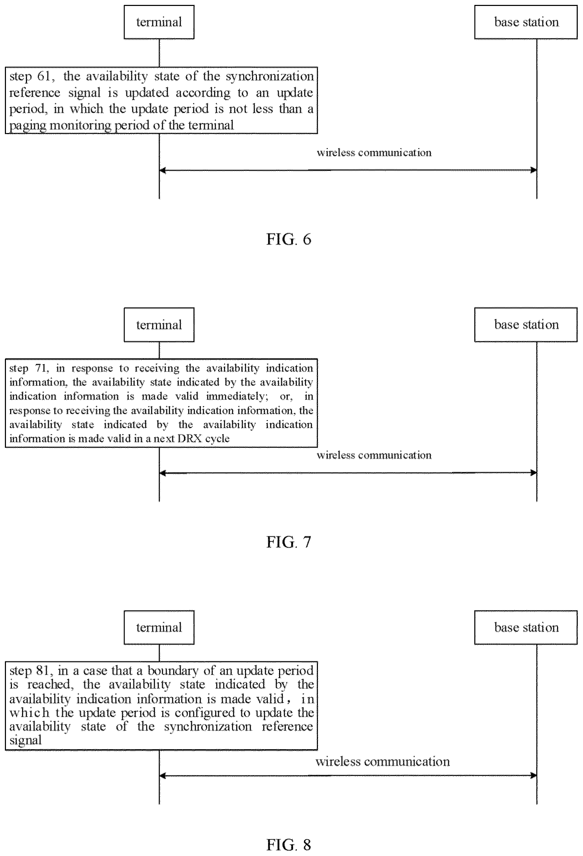

As shown in FIG. 6, a method for synchronizing a terminal and a network is provided in an embodiment. The method is performed by the terminal, and the method includes:
step 61, the availability state of the synchronization reference signal is updated according to an update period, in which the update period is not less than a paging monitoring period of the terminal.

In one embodiment, the update period may be determined by the base station.

In one embodiment, the update period may be determined according to wireless communication quality. Exemplarily, in response to the wireless communication quality being greater than the quality threshold, the update period is greater than the period threshold; or, in response to the wireless communication quality being less than the quality threshold, the update period is less than the period threshold. In this way, the update period can be adapted to the wireless communication quality.

In one embodiment, after the availability state of the synchronization reference signal is updated according to the update period, the terminal cannot immediately perform synchronization between the terminal and the network based on the availability state, and the availability state needs to be made valid. Only after the availability state is made valid, the terminal is able to perform synchronization between the terminal and the network.

In one embodiment, the update period is as same as a change period of the system message.

In one embodiment, the update period is a default DRX paging cycle of the cell.

It should be noted that those skilled in the art can understand that the methods provided in the embodiments of the present disclosure may be executed independently, or together with some methods in the embodiments of the present disclosure or some methods in related art.

As shown in FIG. 7, a method for synchronizing a terminal and a network is provided in an embodiment. The method is performed by the terminal, and the method includes:
step 71, in response to receiving the availability indication information, the availability state indicated by the availability indication information is made valid immediately;
   or,
in response to receiving the availability indication information, the availability state indicated by the availability indication information is made valid in a next discontinuous reception (DRX) cycle.

In one embodiment, in response to receiving the availability indication information, the availability state of the synchronization reference signal is determined according to the availability indication information. After the availability state of the synchronization reference signal is determined, the availability state indicated by the availability indication information may be made valid immediately, so that the synchronization between the terminal and the network can be performed immediately based on the synchronization reference signal. Alternatively, after determining the availability state of the synchronization reference signal, the availability state indicated by the availability indication information may be made valid in the next DRX cycle, so that the synchronization between the terminal and the network can be performed based on the synchronization reference signal in the next DRX cycle.

It should be noted that those skilled in the art can understand that the methods provided in the embodiments of the present disclosure may be executed independently, or together with some methods in the embodiments of the present disclosure or some methods in related art.

As shown in FIG. 8, a method for synchronizing a terminal and a network is provided in an embodiment. The method is performed by the terminal, and the method includes:
step 81, in a case that a boundary of an update period is reached, the availability state indicated by the availability indication information is made valid.

The update period is configured to update the availability state of the synchronization reference signal.

In one embodiment, when the boundary of the update period is reached, the availability state indicated by the availability indication information is made valid. In this way, after the availability state of the availability indication information is made valid, the synchronization between the terminal and the network can be performed based on the synchronization reference signal.

In one embodiment, the update period may be determined according to wireless communication quality. Exemplarily, in response to the wireless communication quality being greater than the quality threshold, the update period is greater than a period threshold; or, in response to the wireless communication quality being less than the quality threshold, the update period is less than the period threshold. In this way, the update period can be adapted to the wireless communication quality.

It should be noted that those skilled in the art can understand that the methods provided in the embodiments of the present disclosure may be executed independently, or together with some methods in the embodiments of the present disclosure or some methods in related art.

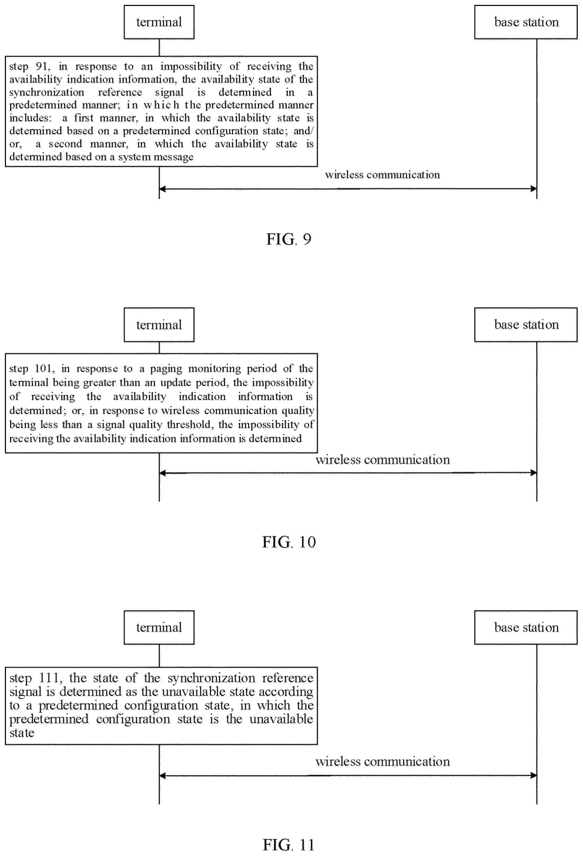

As shown in FIG. 9, a method for synchronizing a terminal and a network is provided in an embodiment. The method is performed by the terminal, and the method includes:
step 91, in response to an impossibility of receiving the availability indication information, the availability state of the synchronization reference signal is determined in a predetermined manner.

The predetermined manner includes:
a first manner, in which the availability state is determined based on a predetermined configuration state;
   and/or,
a second manner, in which the availability state is determined based on a system message.

In one embodiment, in response to a paging monitoring period of the terminal being greater than an update period, an impossibility of receiving the availability indication information is determined; in response to the impossibility of receiving the availability indication information, the availability state of the synchronization reference signal is determined in the predetermined manner.

In one embodiment, in response to wireless communication quality being less than a signal quality threshold, an impossibility of receiving the availability indication information is determined; in response to the impossibility of receiving the availability indication information, the availability state of the synchronization reference signal is determined in the predetermined manner.

In one embodiment, the predetermined configuration state is the unavailable state. The predetermined manner is the first manner. The state of the synchronization reference signal may be determined as the unavailable state according to the predetermined configuration state.

In one embodiment, the system message carries availability state information. The predetermined manner is the second manner. The state of the synchronization reference signal may be determined according to the availability state information carried in the system message. For example, if the availability state carried in the system message is an available state, then the state of the synchronization reference signal is the available state; if the availability state carried in the system message is the unavailable state, then the state of the synchronization reference signal is the unavailable state.

It should be noted that those skilled in the art can understand that the methods provided in the embodiments of the present disclosure may be executed independently, or together with some methods in the embodiments of the present disclosure or some methods in related art.

As shown in FIG. 10, a method for synchronizing a terminal and a network is provided in an embodiment. The method is performed by the terminal, and the method includes:
step 101, in response to a paging monitoring period of the terminal being greater than an update period, the impossibility of receiving the availability indication information is determined;
   or,
in response to wireless communication quality being less than a signal quality threshold, the impossibility of receiving the availability indication information is determined.

In one embodiment, the update period may be determined according to the wireless communication quality. Exemplarily, in response to the wireless communication quality being greater than the quality threshold, the update period is greater than a period threshold; or, in response to the wireless communication quality being less than the quality threshold, the update period is less than the period threshold. In this way, the update period can be adapted to the wireless communication quality.

In one embodiment, the quality threshold may be determined according to a radio quality communication requirement parameter. Exemplarily, in response to the radio quality communication requirement parameter being greater than the parameter threshold, the quality threshold is greater than a predetermined value; or in response to the radio quality communication requirement parameter being less than the parameter threshold, the quality threshold is less than the predetermined value. In this way, the quality threshold can be adapted to the radio quality communication requirement parameter.

It should be noted that those skilled in the art can understand that the methods provided in the embodiments of the present disclosure may be executed independently, or together with some methods in the embodiments of the present disclosure or some methods in related art.

As shown in FIG. 11, a method for synchronizing a terminal and a network is provided in an embodiment. The method is performed by the terminal, and the method includes:
step 111, the state of the synchronization reference signal is determined as the unavailable state according to a predetermined configuration state, in which the predetermined configuration state is the unavailable state.

In one embodiment, the predetermined configuration state may be pre-configured as the unavailable state, and the state of the synchronization reference signal is determined as the unavailable state according to the predetermined configuration state.

It should be noted that, those skilled in the art can understand that the methods provided in the embodiments of the present disclosure may be executed independently, or together with some methods in the embodiments of the present disclosure or some methods in related art.

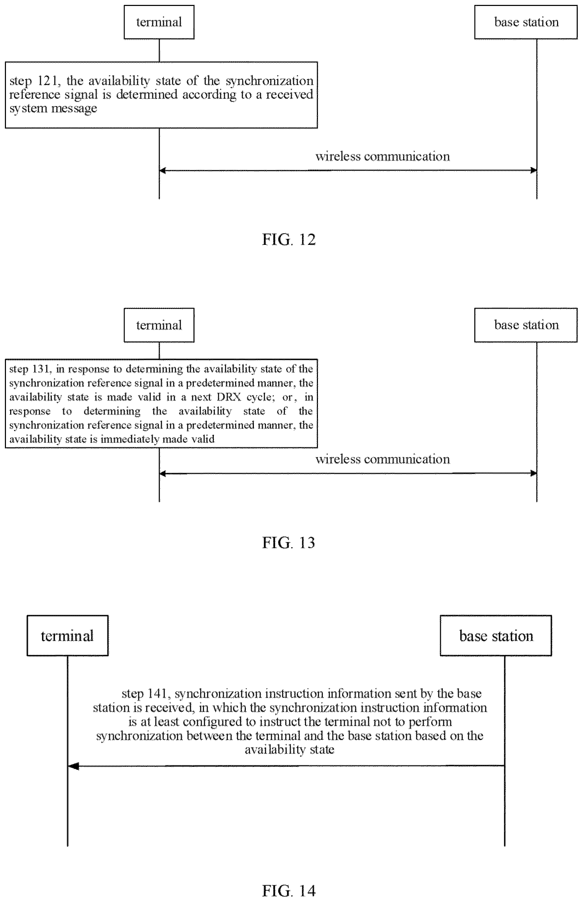

As shown in FIG. 12, a method for synchronizing a terminal and a network is provided in an embodiment. The method is performed by the terminal, and the method includes:
step 121, the availability state of the synchronization reference signal is determined according to a received system message.

In an embodiment, the system message carries configuration information of the synchronization reference signal and/or availability indication information.

In one embodiment, the system message carries the configuration information of the synchronization reference signal. In response to the configuration information indicating that no configuration parameter of the synchronization reference signal is configured, the state of the synchronization reference signal is determined as the unavailable state; or, in response to the configuration information indicating that a configuration parameter of the synchronization reference signal is configured, the state of the synchronization reference signal is determined according to a predetermined configuration, in which the predetermined configuration indicates that the state of the synchronization reference signal is configured as the available state or the unavailable state.

Exemplarily, in response to the configuration information indicating that the configuration parameter of the synchronization reference signal is configured and the predetermined configuration indicating that the state of the synchronization reference signal is configured as an available state, it is determined that the synchronization reference signal state is the available state. Alternatively, in response to the configuration information indicating that the configuration parameter of the synchronization reference signal is configured and the predetermined configuration indicates that the state of the synchronization reference signal is configured as the unavailable state, it is determined that the state of the synchronization reference signal is the unavailable state.

In one embodiment, the availability indication information is carried in the system message. The availability indication information corresponds to a predetermined information field. In some embodiments, in response to the predetermined information field of the system message indicating a first value, it is determined that the state of the synchronization reference signal is the available state; or, in response to the predetermined information field of the system message indicating a second value, it is determined that the state of the synchronization reference signal is the unavailable state; or, in response to the system message not carrying the predetermined information field, it is determined that the state of the synchronization reference signal is the unavailable state; or, in response to the system message carrying the predetermined information field, it is determined that the state of the synchronization reference signal is the available state.

It should be noted that those skilled in the art can understand that the methods provided in the embodiments of the present disclosure may be executed independently, or together with some methods in the embodiments of the present disclosure or some methods in related art.

As shown in FIG. 13, a method for synchronizing a terminal and a network is provided in an embodiment. The method is performed by the terminal, and the method includes:
step 131, in response to determining the availability state of the synchronization reference signal in a predetermined manner, the availability state is made valid in a next DRX cycle;
   or,
in response to determining the availability state of the synchronization reference signal in a predetermined manner, the availability state is immediately made valid.

In one embodiment, the availability state of the synchronization reference signal is determined as the unavailable state according to the predetermined configuration state, in which the predetermined configuration state is the unavailable state. After the availability state is determined, the availability state is made valid in the next DRX cycle.

In one embodiment, the availability state of the synchronization reference signal is determined as the unavailable state according to the predetermined configuration state, in which the predetermined configuration state is the unavailable state. After the availability state is determined, the availability state is immediately made valid.

In one embodiment, the availability state of the synchronization reference signal is determined according to the received system message. After the availability state is determined, the availability state is made valid in the next DRX cycle.

In one embodiment, the availability state of the synchronization reference signal is determined according to the received system message. After the availability state is determined, the availability state is immediately made valid.

It should be noted that, those skilled in the art can understand that the methods provided in the embodiments of the present disclosure may be executed independently, or together with some methods in the embodiments of the present disclosure or some methods in related art.

As shown in FIG. 14, a method for synchronizing a terminal and a network is provided in an embodiment. The method is performed by the terminal, and the method includes:
step 141, synchronization instruction information sent by the base station is received, in which the synchronization instruction information is at least configured to instruct the terminal not to perform synchronization between the terminal and the base station based on the availability state.

Here, the terminal may be a terminal with a paging monitoring period greater than a set threshold. For example, the terminal may be a terminal configured to communicate based on eDRX. Here, the set threshold may be a threshold determined by an update period of availability indication information of the TRS or CSI-RS. For example, the set threshold may be the update period of the availability indication information.

In some embodiments, the indication information sent by the base station is received in a broadcast manner; or, the indication information sent by the base station is received in a unicast manner; or, the indication information sent by the base station is received in a predetermined manner determined by a predetermined rule.

In one embodiment, the base station may notify the terminal of rule information of not using TRS or CSI-RS availability indication information for synchronization through a broadcast or dedicated signaling.

In one embodiment, the base station and the terminal may notify the terminal of a rule of not using TRS or CSI-RS availability indication information for synchronization in a protocol predetermined manner.

Here, it should be noted that, not performing the synchronization between the terminal and the base station based on the availability state by the terminal may be performing the synchronization between the terminal and the base station based on the SSB, or performing the synchronization between the terminal and the base station in other ways. This is not limited in the present disclosure.

It should be noted that, those skilled in the art can understand that the methods provided in the embodiments of the present disclosure may be executed independently, or together with some methods in the embodiments of the present disclosure or some methods in related art.

In one embodiment, the synchronization reference signal includes at least one of a time-frequency tracking reference signal (TRS) or a channel state information reference signal (CSI-RS).

In one embodiment, the availability indication information includes:
first information, configured to indicate that the state of the synchronization reference signal is switched from the available state to the unavailable state;
   or,
second information, configured to indicate that the state of the synchronization reference signal is switched from the unavailable state to the available state.

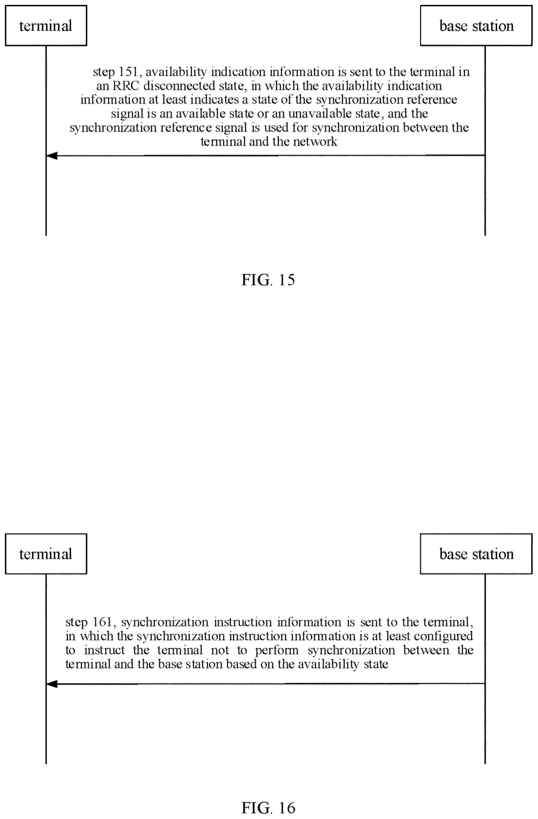

As shown in Figure 15, a method for synchronizing a terminal and a network is provided in an embodiment. The method is performed by a base station, and the method includes:
step 151, availability indication information is sent to the terminal in an RRC disconnected state.

The availability indication information at least indicates a state of the synchronization reference signal is an available state or an unavailable state, and the synchronization reference signal is used for synchronization between the terminal and the network.

Here, the terminal involved in the present disclosure may be, but not limited to, a mobile phone, a wearable device, a vehicle-mounted terminal, a road side unit (RSU), a smart home terminal, an industrial sensing device, and/or a medical device. Here, the terminal in the RRC disconnected state may be the terminal in an RRC idle state or the terminal in an RRC inactive state. Here, the terminal may be a terminal with a paging monitoring period greater than a set threshold.

The base station involved in the present disclosure may be an access device for the terminal to access a network. Here, the base station may be various types of base stations, for example, a base station of a third-generation mobile communication (3G) network, a base station of a fourth-generation mobile communication (4G) network, a base station of a fifth-generation mobile communication (5G) network, or other Evolved base station.

In one embodiment, the synchronization reference signal includes at least one of a time-frequency tracking reference signal (TRS) and a channel state information reference signal (CSI-RS). It should be noted that, the synchronization reference signal may also be other reference signals that can be used for synchronization between the terminal and the network, which is not limited here.

In one embodiment, the availability indication information may be information configured to indicate that the state of the synchronization reference signal is switched from the available state to the unavailable state; or, the availability indication information may also be information configured to indicate that the state of the synchronization reference signal is switched from the unavailable state to the available state.

Exemplarily, the availability state may be indicated in an explicit manner. For example, if a predetermined information field of the availability indication information indicates a first value, the state of the synchronization reference signal is the available state; or, if the predetermined information field of the availability indication information indicates a second value, the state of the synchronization reference signal is the unavailable state.

Exemplarily, the availability state may also be indicated in an implicit manner. For example, if the message carries a predetermined information field of the availability indication information, the state of the synchronization reference signal is the available state; or, if the message does not carry the predetermined information field of the availability indication information, the state of the synchronization reference signal is the unavailable state.

In an embodiment, the base station may configure configuration information of the synchronization reference signal. Here, the configuration information at least indicates time domain and/or frequency domain information for transmitting the synchronization reference signal. The base station may determine the availability indication information according to a determined result of whether broadcasting the synchronization reference signal. Exemplarily, if the base station is broadcasting the synchronization reference signal, the availability indication information indicates that the state of the synchronization reference signal is the available state, or, if the base station is not broadcasting the synchronization reference signal, the availability indication information indicates that the state of the synchronization reference signal is the unavailable state. It should be noted that whether broadcasting the synchronization reference signal may be determined by the base station.

In one embodiment, the base station sends the availability indication information to the terminal; in response to the terminal receiving the availability indication information, the terminal determines the availability state of the synchronization reference signal according to the availability indication information, or, in response to the terminal not receiving the availability indication information, the terminal determines the availability state of the synchronization reference signal in a predetermined manner. Here, the predetermined manner may be different from the manner of determining the availability state of the synchronization reference signal according to the availability indication information. For example, it may be a manner of determining the availability state of the synchronization reference signal according to information carried in a system message, which is not limited here.

In one embodiment, in response to the terminal receiving the availability indication information and the availability indication information indicating that the availability state of the synchronization reference signal is the available state, the terminal determines that the synchronization reference signal is in the available state; or, in response to the terminal receiving the availability indication information and the availability indication information indicating that the availability state of the synchronization reference signal is the unavailable state, the terminal determines that the synchronization reference signal is in the unavailable state. Here, when the synchronization reference signal is in the available state, the terminal may perform synchronization between the terminal and the network based on the synchronization reference signal. It should be noted that, when the synchronization reference signal is in the unavailable state, the terminal cannot perform synchronization between the terminal and the network based on the synchronization reference signal.

In one embodiment, when the terminal does not receive the availability indication information, the terminal may perform synchronization between the network and the terminal according to an SSB-based synchronization manner. Alternatively, when the terminal receives the availability indication information and the availability indication information indicates that the synchronization reference signal is in the unavailable state, the terminal may perform synchronization between the network and the terminal according to the SSB-based synchronization manner. In this way, it can be adapted to different network scenarios.

In one embodiment, when the terminal does not receive the availability indication information, the terminal may perform synchronization between the network and the terminal according to the state of the synchronization reference signal determined in a first manner. The first manner is to determine the availability based on a predetermined configuration state. Here, the predetermined configuration state may be preconfigured as the available state or the unavailable state. It should be noted that, before performing synchronization between the network and the terminal according to the first manner, the terminal needs to receive the configuration information of the synchronization reference signal.

In one embodiment, when the terminal does not receive the availability indication information, the terminal may perform synchronization between the network and the terminal according to the state of the synchronization reference signal determined in a second manner. The second manner is to determine the availability state based on a system message. Here, the system message may carry indication information of the availability state, and the indication information may indicate that the synchronization reference signal is in the available state or the unavailable state. Here, as mentioned above, the system message may indicate the indication information of the availability state in an explicit or implicit manner, which is not limited here. In an embodiment, the system message may also carry the configuration information of the synchronization reference signal.

In one embodiment, in response to receiving the availability indication information, the availability state of the synchronization reference signal is determined according to the availability indication information. After the terminal determines the availability state of the synchronization reference signal based on the received availability indication information, it may update the availability state of the synchronization reference signal at a predetermined time point determined according to the update period. As an embodiment, the update period is a default DRX paging cycle of the cell. In one embodiment, updating the availability state of the synchronization reference signal at the predetermined time point may be updating the availability state of the synchronization reference signal at the beginning of an update period in which the availability indication information is received.

In one embodiment, in response to receiving the availability indication information, the availability state of the synchronization reference signal is determined according to the availability indication information. After the availability state of the synchronization reference signal is determined, the availability state indicated by the availability indication information is made valid immediately. Alternatively, in response to receiving the availability indication information, the availability state of the synchronization reference signal is determined according to the availability indication information. After the availability state of the synchronization reference signal is determined, the availability state indicated by the availability indication information is made valid in a next DRX cycle. Here, the update period may be as same as a change period of a system message.

In one embodiment, in response to receiving the availability indication information, the availability state of the synchronization reference signal is determined according to the availability indication information. When a boundary of an update period is reached, the availability state indicated by the availability indication information is made valid. The update period is configured to update the availability state of the synchronization reference signal.

It should be noted that the update of the availability state may be a process different from a process of making the availability state valid. Updating the availability state does not mean that the availability state has been made valid. The synchronization between the terminal and the network based on the synchronization reference signal can be performed only after the availability state has been made valid.

In one embodiment, if the paging monitoring period of the terminal is greater than the update period, the impossibility of receiving the availability indication information is determined, and at this time, the terminal determines the availability state of the synchronization reference signal in the predetermined manner. Alternatively, if wireless communication quality is less than a signal quality threshold, the impossibility of receiving the availability indication information is determined, and at this time, the terminal determines the availability state of the synchronization reference signal in the predetermined manner. Here, the predetermined manner may include: a first manner, in which the availability state is determined based on the predetermined configuration state; and/or, a second manner, in which the availability state is determined based on the system message.

In one embodiment, the impossibility of the terminal to receive the availability indication information may be: trying to decode, but the decoding fails due to signal quality.

In one embodiment, the impossibility of the terminal to receive the availability indication information may be: from out of coverage to return to coverage. It should be noted that, in the present disclosure, the reason for the impossibility of the terminal to receive the availability indication information is not specifically limited, and includes various situations that cause the impossibility of receiving the availability indication information.

In one embodiment, if the paging monitoring period of the terminal is shorter than or equal to the update period, a possibility of receiving the availability indication information is determined, and at this time, the availability state of the synchronization reference signal may be determined according to the availability indication information.

It should be noted that those skilled in the art can understand that the methods provided in the embodiments of the present disclosure may be executed independently, or together with some methods in the embodiments of the present disclosure or some methods in related art.

As shown in FIG. 16, a method for synchronizing a terminal and a network is provided in an embodiment. The method is performed by a base station, and the method includes:
step 161, synchronization instruction information is sent to the terminal, in which the synchronization instruction information is at least configured to instruct the terminal not to perform synchronization between the terminal and the base station based on the availability state.

Here, the terminal may be a terminal with a paging monitoring period greater than a set threshold. For example, the terminal may be a terminal configured to communicate based on eDRX. Here, the set threshold may be a threshold determined by an update period of availability indication information of the TRS or CSI-RS. For example, the set threshold may be the update period of the availability indication information.

In some embodiments, the indication information sent by the base station is received in a broadcast manner; or, the indication information sent by the base station is received in a unicast manner; or, the indication information sent by the base station is received in a predetermined manner determined by a predetermined rule.

In one embodiment, the base station may notify the terminal of rule information of not using TRS or CSI-RS availability indication information for synchronization through a broadcast or dedicated signaling.

In one embodiment, the base station and the terminal may notify the terminal of a rule of not using TRS or CSI-RS availability indication information for synchronization in a protocol predetermined manner.

In one embodiment, the synchronization reference signal includes at least one of a time-frequency tracking reference signal (TRS) or a channel state information reference signal (CSI-RS).

In one embodiment, the availability indication information includes:
first information, configured to indicate that the state of the synchronization reference signal is switched from the available state to the unavailable state;
   or,
second information, configured to indicate that the state of the synchronization reference signal is switched from the unavailable state to the available state.

It should be noted that, those skilled in the art can understand that the methods provided in the embodiments of the present disclosure may be executed independently, or together with some methods in the embodiments of the present disclosure or some methods in related art.

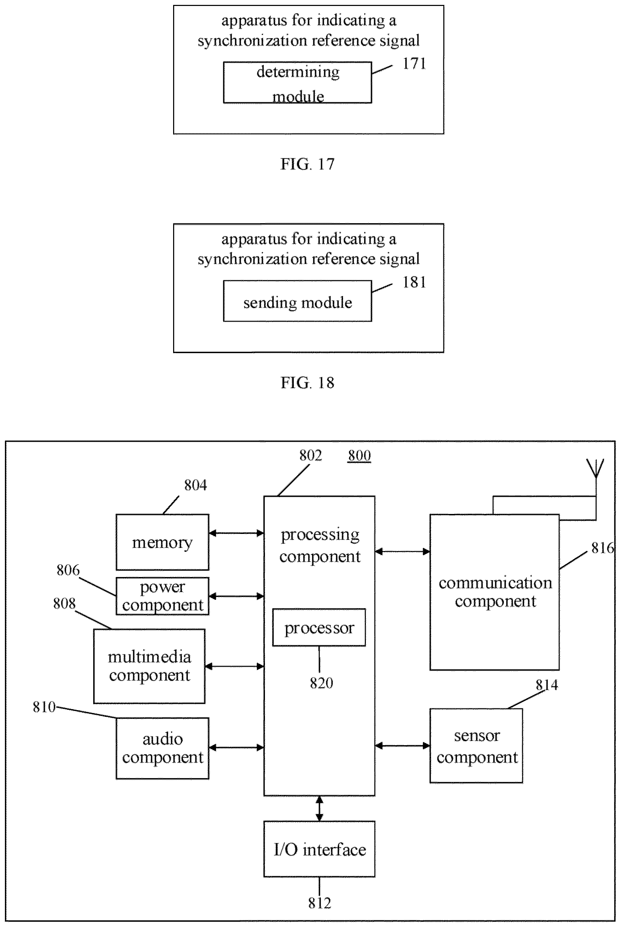

As shown in FIG. 17, an apparatus for indicating a synchronization reference signal is provided by an embodiment of the present disclosure. The apparatus includes:
a determining module 171, configured to determine an availability state of a synchronization reference signal based on a result of whether receiving availability indication information.

The availability indication information at least indicates a state of the synchronization reference signal is an available state or an unavailable state, and the synchronization reference signal is used for synchronization between the terminal in an RRC disconnected state and the network.

It should be noted that, those skilled in the art can understand that the methods provided in the embodiments of the present disclosure may be executed independently, or together with some methods in the embodiments of the present disclosure or some methods in related art.

As shown in FIG. 18, an apparatus for indicating a synchronization reference signal is provided by an embodiment of the present disclosure. The apparatus includes:
a sending module 181, configured to send availability indication information to a terminal in an RRC disconnected state;
The availability indication information at least indicates a state of the synchronization reference signal is an available state or an unavailable state, and the synchronization reference signal is used for synchronization between the terminal and the network.

It should be noted that, those skilled in the art can understand that the methods provided in the embodiments of the present disclosure may be executed independently, or together with some methods in the embodiments of the present disclosure or some methods in related art.

A communication device is provided by an embodiment of the present disclosure. The communication device includes:
a processor; and
a memory for storing processor-executable instructions.

The processor is configured to implement the method of any embodiment of the present disclosure when executing the executable instructions.

The processor may include various types of storage media, which are non-transitory computer storage media, and can continue to memorize and store information thereon after the communication device is powered off.

The processor may be connected to the memory via a bus or the like, and is configured to read an executable program stored in the memory.

A computer storage medium is further provided by an embodiment of the present disclosure. The computer storage medium stores a computer executable program. When the executable program is executed by a processor, the method of any embodiment of the present disclosure is implemented.

Regarding the apparatuses in the foregoing embodiments, the specific manner in which each module executes operations has been described in detail in the embodiments related to the methods, and will not be described in detail here.

As shown in FIG. 19, a terminal structure is provided by an embodiment of the present disclosure.

Referring to FIG. 19 illustrating a terminal 800 provided in an embodiment of the present disclosure. The terminal may specifically be a mobile phone, computer, digital broadcast terminal, messaging device, game console, tablet device, medical device, fitness device, personal digital assistant, and the like.

Referring to FIG. 19, the terminal 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include at least one processor 820 to execute instructions to perform all or part of the steps in the above described methods. Moreover, the processing component 802 may include at least one module which facilitates the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or their combination, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 806 provides power to various components of the terminal 800. The power component 806 may include a power management system, at least one power source, and any other components associated with the generation, management, and distribution of power in the terminal 800.

The multimedia component 808 includes a screen providing an output interface between the terminal 800 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the terminal 800. For instance, the sensor component 814 may detect an open/closed state of the terminal 800, relative positioning of components, e.g., the display and the keypad of the terminal 800, and the sensor component 814 may further detect a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as Wi-Fi, 2G, 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the terminal 800 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-temporary computer-readable storage medium including instructions, such as the memory 804 including instructions. The instructions can be executed by the processor 820 of the terminal 800 to complete the above methods. For example, the non-temporary computer-readable storage media may be a ROM, a random access memory (RAM), a CD-ROM, a magnetic tape, a floppy disk, and an optical data storage device.

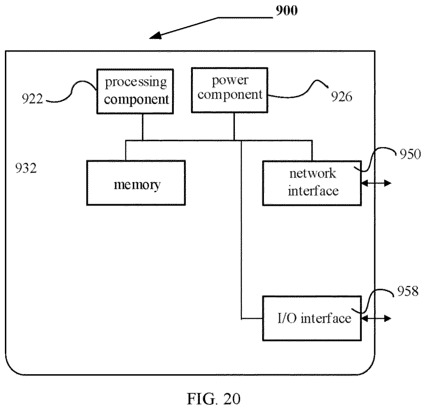

As shown in FIG. 20, a base station structure is provided by an embodiment of the present disclosure. For example, the base station 900 may be provided as a network device. Referring to FIG. 20, the base station 900 includes a processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions to perform any method applied to the network device.

The base station 900 may also include a power component 926 configured to perform power management of the base station 900, a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other embodiments of the invention will be readily apparent to those skilled in the art from consideration of the specification and practice of the invention disclosed herein. The present disclosure is intended to cover any modification, use or adaptation of the present invention, these modifications, uses or adaptations follow the general principles of the present invention and include common knowledge or conventional technical means in the technical field not disclosed in the present disclosure. The specification and the embodiments are to be considered exemplary only, with a true scope and spirit of the present disclosure being indicated by the following claims.

It should be understood that the present disclosure is not limited to the precise constructions which have been described above and shown in the drawings, and various modifications and changes may be made without departing from the scope thereof. The scope of the present disclosure is limited only by the appended claims.

## Claims

1. A method for synchronizing a terminal and a network, performed by the terminal, comprising:
determining an availability state of a synchronization reference signal based on a result of whether receiving availability indication information;
wherein the availability indication information at least indicates a state of the synchronization reference signal is an available state or an unavailable state, and the synchronization reference signal is used for synchronization between the terminal in a radio resource control (RRC) disconnected state and the network.

2. The method according to claim 1, wherein determining the availability state of the synchronization reference signal based on the result of whether receiving the availability indication information, comprises:
determining the availability state of the synchronization reference signal according to the availability indication information, in response to receiving the availability indication information.

3. The method according to claim 2, wherein determining the availability state of the synchronization reference signal according to the availability indication information, comprises:
determining that the synchronization reference signal is in the available state, in response to the availability indication information indicating that the availability state of the synchronization reference signal is the available state;
or,
determining that the synchronization reference signal is in the unavailable state, in response to the availability indication information indicating that the availability state of the synchronization reference signal is the unavailable state.

4. The method according to claim 2, further comprising:
updating the availability state of the synchronization reference signal according to an update period, wherein the update period is not less than a paging monitoring period of the terminal.

5. The method according to claim 2, further comprising:
making an availability state indicated by the availability indication information valid immediately, in response to receiving the availability indication information;
or,
making an availability state indicated by the availability indication information valid in a next discontinuous reception (DRX) cycle, in response to receiving the availability indication information.

6. The method according to claim 2, further comprising:
in a case that a boundary of an update period is reached, making an availability state indicated by the availability indication information valid;
wherein the update period is configured to update the availability state of the synchronization reference signal.

7. The method according to claim 4 or 6, wherein the update period is as same as a change period of a system message.

8. The method according to claim 1, wherein determining the availability state of the synchronization reference signal based on the result of whether receiving the availability indication information, comprises:
determining the availability state of the synchronization reference signal in a predetermined manner, in response to an impossibility of receiving the availability indication information;
wherein, the predetermined manner comprises:
a first manner, in which the availability state is determined based on a predetermined configuration state;
and/or,
a second manner, in which the availability state is determined based on a system message.

9. The method according to claim 8, further comprising:
determining the impossibility of receiving the availability indication information, in response to a paging monitoring period of the terminal being greater than an update period;
or,
determining the impossibility of receiving the availability indication information, in response to wireless communication quality being less than a signal quality threshold.

10. The method according to claim 8, wherein the predetermined manner is the first manner, and determining the availability state of the synchronization reference signal in the first manner comprises:
determining the state of the synchronization reference signal as the unavailable state according to the predetermined configuration state, wherein the predetermined configuration state is the unavailable state.

11. The method according to claim 8, wherein the predetermined manner is the second manner, and determining the availability state of the synchronization reference signal in the second manner comprises:
determining the availability state of the synchronization reference signal according to a received system message.

12. The method according to claim 11, wherein determining the availability state of the synchronization reference signal according to the received system message, comprises:
determining the state of the synchronization reference signal according to configuration information of the synchronization reference signal carried in the system message;
or,
determining the state of the synchronization reference signal according to availability indication information carried in the system message.

13. The method according to claim 12, wherein determining the state of the synchronization reference signal according to the configuration information of the synchronization reference signal carried in the system message, comprises:
determining the state of the synchronization reference signal as the unavailable state, in response to the configuration information indicating that no configuration parameter of the synchronization reference signal is configured;
or,
determining the state of the synchronization reference signal according to a predetermined configuration, in response to the configuration information indicating that a configuration parameter of the synchronization reference signal is configured, wherein the predetermined configuration indicates that the state of the synchronization reference signal is configured as the available state or the unavailable state.

14. The method according to claim 12, wherein determining the state of the synchronization reference signal according to the availability indication information carried in the system message, comprises:
determining the state of the synchronization reference signal as the available state, in response to a predetermined information field of the system message indicating a first value;
or,
determining the state of the synchronization reference signal as the unavailable state, in response to a predetermined information field of the system message indicating a second value;
or,
determining the state of the synchronization reference signal as the unavailable state, in response to the system message not carrying a predetermined information field;
or,
determining the state of the synchronization reference signal as the available state, in response to the system message carrying a predetermined information field.

15. The method according to claim 8, further comprising:
making the availability state valid in a next DRX cycle, in response to determining the availability state of the synchronization reference signal in the predetermined manner;
or,
making the availability state valid immediately, in response to determining the availability state of the synchronization reference signal in the predetermined manner.

16. The method according to claim 1, further comprising:
receiving synchronization instruction information sent by a base station, wherein the synchronization instruction information is at least configured to instruct the terminal not to perform synchronization between the terminal and the base station based on an availability state.

17. The method according to claim 16, wherein the terminal is a terminal with a paging monitoring period greater than a set threshold.

18. The method according to claim 16, wherein receiving the synchronization instruction information sent by the base station comprises:
receiving the synchronization instruction information sent by the base station in a broadcast manner;
or,
receiving the synchronization instruction information sent by the base station in a unicast manner;
or,
receiving the synchronization instruction information sent by the base station in a predetermined manner determined by a predetermined rule.

19. The method according to claim 1, wherein the synchronization reference signal comprises at least one of a time-frequency tracking reference signal (TRS) or a channel state information reference signal (CSI-RS).

20. The method according to claim 1, wherein the availability indication information comprises:
first information, configured to indicate that the state of the synchronization reference signal is switched from the available state to the unavailable state;
or,
second information, configured to indicate that the state of the synchronization reference signal is switched from the unavailable state to the available state.

21. A method for indicating a synchronization reference signal, performed by a base station, comprising:
sending availability indication information to a terminal in a radio resource control (RRC) disconnected state;
wherein the availability indication information at least indicates a state of the synchronization reference signal is an available state or an unavailable state, and the synchronization reference signal is used for synchronization between the terminal and a network.

22. The method according to claim 21, further comprising:
sending synchronization instruction information to the terminal, wherein the synchronization instruction information is at least configured to instruct the terminal not to perform synchronization between the terminal and the base station based on an availability state.

23. The method according to claim 21, wherein the synchronization reference signal comprises at least one of a time-frequency tracking reference signal (TRS) or a channel state information reference signal (CSI-RS).

24. The method according to claim 21, wherein the availability indication information comprises:
first information, configured to indicate that the state of the synchronization reference signal is switched from the available state to the unavailable state;
or,
second information, configured to indicate that the state of the synchronization reference signal is switched from the unavailable state to the available state.

25. An apparatus for indicating a synchronous reference signal, comprising:
a determining module, configured to determine an availability state of a synchronization reference signal based on a result of whether receiving availability indication information;
wherein the availability indication information at least indicates a state of the synchronization reference signal is an available state or an unavailable state, and the synchronization reference signal is used for synchronization between a terminal in a radio resource control (RRC) disconnected state and a network.

26. An apparatus for indicating a synchronous reference signal, comprising:
a sending module, configured to send availability indication information to a terminal in a radio resource control (RRC) disconnected state;
wherein the availability indication information at least indicates a state of the synchronization reference signal is an available state or an unavailable state, and the synchronization reference signal is used for synchronization between the terminal and a network.

27. A communication device, comprising:
a memory; and
a processor, connected to the memory, and configured to implement the method according to any one of claims 1-20 or 21-24 by executing computer-executable instructions stored in the memory.

28. A computer-readable storage medium having stored thereon computer-executable instructions, when being executed, enable the method according to any one of claims 1-20 or 21-24 to be implemented.
